# EUROPEAN PATENT SPECIFICATION

(11) **EP 3 083 448 B1**
(45) Date of publication and mention of the grant of the patent: **30.01.2019**
(21) Application number: 14871634.3
(22) Date of filing: 16.12.2014
(51) Int. Cl.: B65D 85/804, A47J 31/06

(54) **CAPSULE WITH SENSORY ATTRIBUTES**
KAPSEL MIT SENSORISCHEN EIGENSCHAFTEN
CAPSULE DOTÉE D'ATTRIBUTS SENSORIELS

(30) Priority: 16.12.2013 US 201361916616 P
(43) Date of publication of application: 26.10.2016
(73) Proprietor: 2266170 Ontario, Inc., Mississauga, Ontario L4Y 1S4 (CA)
(72) Inventor: TROMBETTA, Liberatore A., Ancaster, Ontario L9G 4X6 (CA)
(74) Representative: Nederlandsch Octrooibureau
(86) International application number: PCT/CA2014/051217
(87) International publication number: WO 2015/089660

(56) References cited:
- EP-A1- 2 230 195
- WO-A1-2010/066705
- WO-A1-2010/126365
- WO-A1-2012/007257
- CA-A1- 2 807 489
- CA-A1- 2 807 489
- US-A- 4 131 064

## Description

### FIELD

This specification relates to consumable products and in particular to capsules, for use in capsule machines, for preparing a consumable product and to cartons adapted for packaging and displaying such capsules.

### BACKGROUND

The following background discussion is not an admission that anything discussed below is citable as prior art or common general knowledge.

Single serve capsules for use in machines to prepare a desired consumable product are becoming increasingly popular. Such capsules come in a variety of formats containing ingredients for producing consumable products such as coffee, tea, hot chocolate or soup. Single chamber capsules, such as espresso capsules, have a single chamber defined by a plastic or aluminum body having a cover at one end. The chamber is densely packed with ingredients, such as ground coffee, for producing a desired consumable product in a high pressure machine.

One example of a single chamber capsule is the Nespresso Grands Crus™ capsule. This capsule has an aluminum body with a foil cover. The foil cover is pierced by square protrusions in the capsule holder when hot water is injected under pressure by the machine into the capsule. A capsule for the production of coffee is known from EP 2230195. An injection-molded capsule for use in a food preparation machine is known from CA 2807489. A pad for preparing a beverage is known from WO 2010/126365.

Multi chamber capsules, such as drip coffee capsules, have a first chamber defined by a filter (typically a paper filter) that is loosely packed with ingredients (such as ground coffee) and a second chamber downstream of the first chamber that defines an empty space for receiving a prepared consumable product that flows through the filter prior to dispensing into a cup.

One example of a multi chamber capsule is the Keurig K-Cup™ capsule. This capsule includes a paper filter having a side wall that is sealed to an inside peripheral edge of the capsule. The side wall of the filter is pleated or fluted to define channels extending between the top and bottom of the filter. The channels are intended to improve fluid flow down the side wall of the chamber.

A problem with conventional single serve capsules is that the end user is provided with little or no sensory connection to the ingredients contained within the capsule prior to the preparation of the consumable product. For example, the end user is unable to see or smell the ingredients prior to the preparation of the consumable product. The absence of sensory clues such as visual or aromatic clues can detract from the user's full enjoyment of the product. Also, sensory clues can improve the ability to market the capsules to end users by revealing attributes of the ingredients contained within the capsule.

There is a need for an improved capsule for use in a capsule machine that addresses one or more of the above problems.

### SUMMARY

In one aspect the invention provides a capsule, for use in a machine for preparing consumable products from capsules, said capsule comprising:
a body defining an interior space with an opening;
ingredients disposed in said interior space for preparing a desired product;
a cover disposed over said opening; and
a window defined in said cover for viewing said ingredients.

In another aspect, the invention provides a capsule, for use in a machine for preparing consumable products from capsules, said capsule comprising:
a body defining an interior space with an opening;
ingredients disposed in said interior space for preparing a desired product;
a cover disposed over said opening; and
at least one vent defined in said capsule for venting said capsule.

In another aspect, the invention provides a carton for containing a plurality of capsules, said capsules being adapted for use in a machine for preparing consumable products from capsules, said carton comprising:
a body defining an interior space for containing a plurality of capsules; and
at least one window, defined in said body, for displaying a portion of one or more capsules.

Other aspects and features of the teachings disclosed herein will become apparent, to those ordinarily skilled in the art, upon review of the following description of the specific examples of the specification.

### DRAWINGS

The drawings included herewith are for illustrating various examples of articles, methods, and apparatuses of the present specification and are not intended to limit the scope of what is taught in any way. For simplicity and clarity of illustration, where considered appropriate, reference numerals may be repeated among the drawings to indicate corresponding or analogous elements.

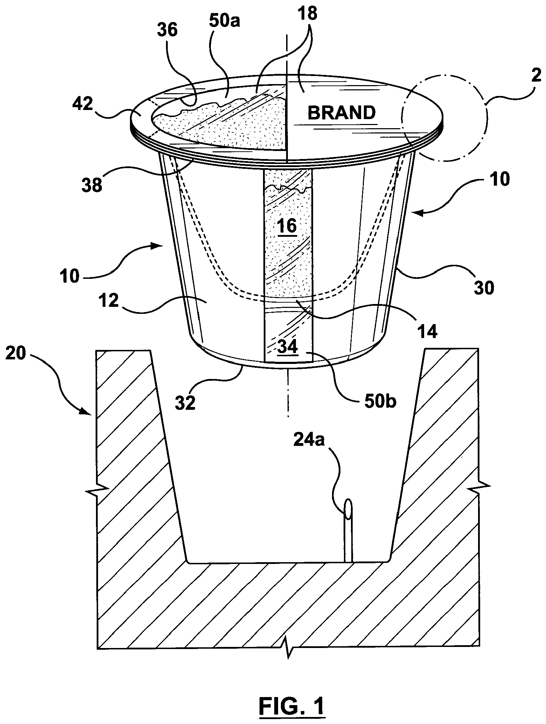

Figure 1 is a perspective view of a capsule in accordance with the present invention disposed within a schematic representation of a machine for preparing consumable products from capsules;

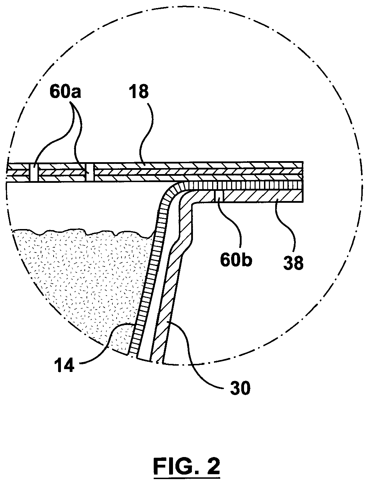

Figure 2 is an enlarged schematic sectional view of a portion of the capsule shown at 2 in Figure 1;
Figure 3 is an enlarged schematic sectional view of an embodiment of the cover for the capsule of Figure 1 without vents;
Figure 4 is an enlarged schematic sectional view of another embodiment of cover for the capsule of Figure 1 having a barrier layer;
Figure 5 is a sectional view of an alternate embodiment of the capsule of Figure 1; and
Figure 6 is a schematic perspective view of a carton in accordance with the present invention adapted for containing a plurality of capsules in accordance with the present invention.

### DESCRIPTION OF VARIOUS EMBODIMENTS

Various apparatuses or methods will be described below to provide examples of the claimed invention. The claimed invention is not limited to apparatuses or methods having all of the features of any one apparatus or method described below or to features common to multiple or all of the apparatuses described below. The claimed invention may reside in a combination or sub-combination of the apparatus elements or method steps described below. It is possible that an apparatus or method described below is not an example of the claimed invention. The applicant(s), inventor(s) and/or owner(s) reserve all rights in any invention disclosed in an apparatus or method described below that is not claimed in this document and do not abandon, disclaim or dedicate to the public any such invention by its disclosure in this document.

A capsule in accordance with the present invention is shown generally at 10 in the figures. Capsule 10 includes a body 12, filter 14 (when required), ingredients 16 and cover 18. Body 12 and cover 18 may be formed of multilayered materials that may include one or more barrier layers providing barriers against one or more environmental factors such as oxygen and moisture. Capsule may be sized to provide a single serving of a desired product or multiple servings.

Ingredients 16 include soluble and/or insoluble ingredients that are a precursor to forming a desired product. Soluble ingredients may include instant coffee, chocolate, soup stock or other ingredients in powdered, crystallized or other forms adapted for solubility or contained within a soluble film or pouch. Insoluble ingredients may include tea leaves, coffee grounds, herbs or other ingredients adapted for forming a consumable product by extraction or infusion. Ingredients 16 may also include active ingredients (eg foaming agents), natural health additives, regulated drugs, alcohol or other soluble or insoluble ingredients.

One or more ingredients 16 may include sensory attributes that are desirable to convey to a consumer or end user prior to the preparation of the consumable product. For example, ingredients 16 may include soluble or insoluble ingredients having visual attributes that may be of interest to a consumer. Ingredients 16 may also include soluble or insoluble ingredients having aromatic attributes that may be of interest to a consumer.

Examples of ingredients 16 with visual attributes include whole tea leaves, florets, pieces of dried fruit, vegetables, herbs, nuts or beans, pieces of chocolate, spices (such as cinnamon sticks), natural health additives (eg gogi berries), pieces of dried meat (eg shimp), vegetables or noodles for soup. Examples of ingredients 16 with aromatic attributes include many of the same ingredients as noted above having visual attributes as well as ground coffee, lemon grass, coconut or chocolate pieces.

In a preferred embodiment, ingredients 16 include a subset of ingredients having irregular shapes and/or relatively large particulate sizes such as one or more of whole leaf teas, herbs, spices, fruits and flowers. Preferably ingredients 16 include a combination of larger particulate sizes and smaller particulate sizes. Ingredients having larger particulate sizes may include whole or substantially whole leaves or other desired portions of tea, herbs, spices, fruits and flowers. Ingredients having smaller particulate sizes may include cut, ground, crystallized or otherwise processed portions of such ingredients. Preferably, at least 50% of the ingredients comprise ingredients having a particulate size greater than a #16 mesh (1.18 mm). More preferably, at least 70% of the ingredients comprise ingredients having a particulate size greater than a #16 mesh.

Capsule 10 is sized and configured for use in a machine 20 that is adapted for preparing a product from capsule 10. Machine 20 may include an injection system (not shown) for injecting a fluid, typically heated water, into the capsule for mixing with ingredients 16. Injection system may include a nozzle disposed on machine 20 that is adapted to pierce cover 18 to inject fluid into capsule 10. Injection system may alternatively have at least one component disposed on capsule 10, such as on cover 18, and adapted to pierce body 12 and interact with machine 20 to inject fluid into capsule 10.

Machine may also include a dispensing system 24 for dispensing product from capsule 10 into a desired receptacle (not shown) such as a bowl or cup. Dispensing system 24 may include a hollow probe 24a that is adapted to pierce capsule 10 to dispense a prepared product from capsule 10.

Body 12 of capsule 10 includes a sidewall 30 and an end wall 32 together defining an interior space 34. An opening 36 is defined at one end of body 12 and a flange 38 extends around the perimeter of opening 36 to receive cover 18 and to support capsule 10 within machine 20.

In another embodiment (not shown), body 12 may be formed with no end wall 32 and no sidewall 30 or a partial sidewall 30. Flange 38 may still extend around the perimeter of opening 36 to receive cover 18 and to support capsule 10 within machine 20. Filter 14 may be secured to flange 38 or to partial sidewall 30 or the underside of cover 18.

Filter 14 is adapted to be disposed within body 12 to define at least one ingredients chamber 40 for receiving one or more ingredients 16 and in particular insoluble ingredients 16 that are not intended to be dispensed into receptacle (for example coffee grounds or tea leaves). Filter 14 may be secured to flange 38 or to an interior surface of capsule 10 (such as to sidewall 30 or the underside of cover 18).

Filter 14 is most preferably formed of a moldable non-woven filter material. More details of the preferred moldable nonwoven filtration material for filter 14 are provided in co-pending US patent application 14/074,024 which is incorporated in its entirety herein by reference. More details of the manner for securing filter 14 and cover 18 to flange 38 of body 12 are provided in co-pending patent application No 13/600,582 which is incorporated in its entirety herein by reference.

Capsule 10 may be provided without filter 14 in instances where ingredients are soluble or where it is desired that insoluble ingredients 16 are dispensed together with fluid into receptacle (this may require that dispensing system 24 be adapted to dispense insoluble ingredients 16).

Cover 18 is disposed over opening 36 and secured to body 12 such as by sealing cover 18 directly to flange 38 or indirectly with a portion of filter 14 located between.

Cover 18 is preferably formed of a material that is resistant to tearing upon puncturing of cover 18 by injection system or the application of a peel force in cases where cover 18 is to be peeled from capsule 10 following use. Furthermore, it is desirable that cover 18 is formed of a material that is adapted to shrink upon exposure to heat in order that cover 18 will shrink around the opening formed in cover 18 by injection system upon exposure to a heated fluid.

Cover 18 and filter 14 may be adapted to be removed from body 12 for instance by separating an integral tab 42 defined in flange 38 and applying a peeling force. More details of capsules 10 having portions that are removable are provided in co-pending patent publication No US 2014-0161936 A1.

Most preferably, cover 18 is formed of a multi-layered material that includes at least one layer that is resistant to tearing upon puncturing or the application of a peel force. Cover 18, or a tear resistant layer of cover 18, preferably has a minimum tensile strength of 20 MPa (3000 psi) and a minimum elongation of 50%. Cover 18 may further include one or more layers of barrier materials adapted to provide a barrier against one or more environmental factors such as oxygen and moisture. Cover 18 may further include one or more luminescent materials that may be adapted tagging of products. Preferably, one or more layers containing barrier materials and luminescent materials are disposed between sealing layers of cover 18. More details of capsules 10 having covers 18 containing barrier layers and luminescent tags are provided in co-pending patent application No WO2016/086296.

Preferably cover 18 includes polymer materials, more preferably cover 18 comprises at least 50% polymer materials and most preferably cover 18 comprises at least 75% polymer materials. Examples of materials that are resistant to tearing include polyethylene (PE), polyethylene terephthalate (PET) and polyamide PA6. A multi-layered material for cover 18 may include at least one layer formed of a continuous film of tear resistant and heat shrinkable material (laminated or extrusion coated) or a non-continuous film such as a non-woven polymer, mesh or perforated film. Examples of a multi-layered material for cover 18 include (from outside layer to inside layer): PET/aluminum foil/PE, PET/EVOH/PE, PET/metalized PET/PE or PET/PE. It has been found that formation of cover 18 from a multilayered PET/PE or PET/EVOH/PE material comprising at least 90% polymer materials provides preferred sealing performance around injection system 22.

One or more windows 50 may be provided in capsule 10 to allow one or more ingredients 16 to be visible from outside of capsule 10 prior to use in machine. For example, cover 18 may include a window 50a to allow ingredients 16 located at the surface of ingredients chamber to be visible from outside of capsule 10. Also, body 12 may include window 50b to allow ingredients 16 located within ingredients chamber to be visible from outside of capsule 10. Windows 50a and 50b may be translucent or, more preferably, transparent to allow ingredients 16 to be clearly visible.

Windows 50a and 50b may comprise the entire cover 18 or the entire body 12 or windows 50a and 50b may comprise a portion of cover 18 or body 12. It may be desirable for example for a portion of cover 18 to be opaque in order that brand elements and/or product information may be disposed on cover 18. Preferably, at least 10%, and more preferably between 10-50%, of the surface area of at least one layer of cover 18 or body 12 is sufficiently opaque or otherwise provides a background that is adapted for placement of brand elements and/or product information.

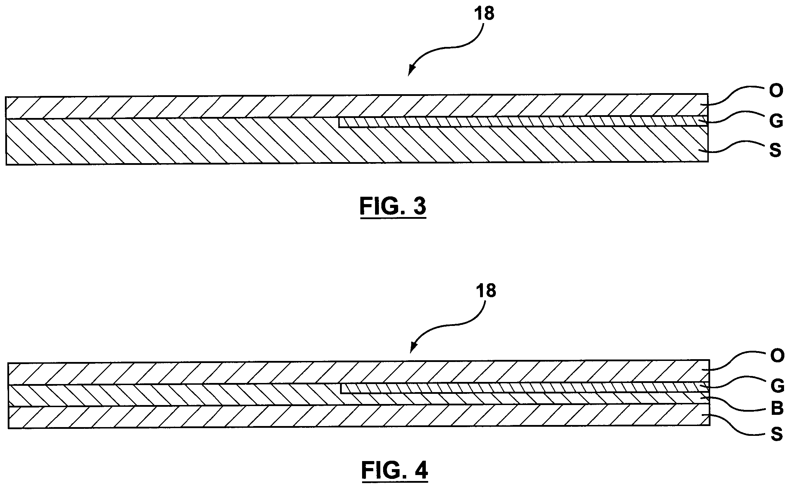

Referring to Figures 3 and 4, enlarged schematic cross sectional views of two embodiments of cover 18 are shown.

In Figure 3, cover 18 includes an outer layer O, a non-transparent graphics layer G and a sealing layer S. As described above and also disclosed in US patent application No 13/600,582 incorporated herein by reference, outer layer O is preferably formed of a polymer material such as PET and sealing layer is preferably formed of a polymer material such as PE. Both outer layer O and sealing layer S are preferably transparent. A layer of graphics G is applied to those portions of the cover 18 that are not desired to be transparent. Such graphics are applied by known printing techniques such as inkjet printing, laserjet printing, bubblejet printing, screen printing, rotogravure printing, flexo printing, and other such techniques. Preferably graphics G are applied to the underside of the transparent outer layer O as a mirror image of the pattern desired for the graphics, a technique referred to as reverse printing. Graphics layer G may include luminescent taggant materials if desired.

In Figure 4, cover 18 includes outer layer O, non-transparent graphics layer G, a barrier layer B and sealing layer S. The outer layer, graphics layer and sealing layer are preferably formed in a similar manner and with similar materials as described with reference to Figure 3. The additional barrier layer B is provided to add barrier properties to cover 18 such as a barrier to oxygen or moisture. Barrier layer is preferably formed of a transparent material and may comprise EVOH, metalized PET or other known barrier materials.

Ingredients chamber 40 has a volume V1 that is adapted to contain a desired volume V2 of ingredients 16. The volume V2 of ingredients 16 is preferably no less than 50% of the volume V1 of ingredients chamber 40, more preferably no less than 70% of the volume V1 and most preferably no less than 90% of the volume V1 so that ingredients are visible through window 50a.

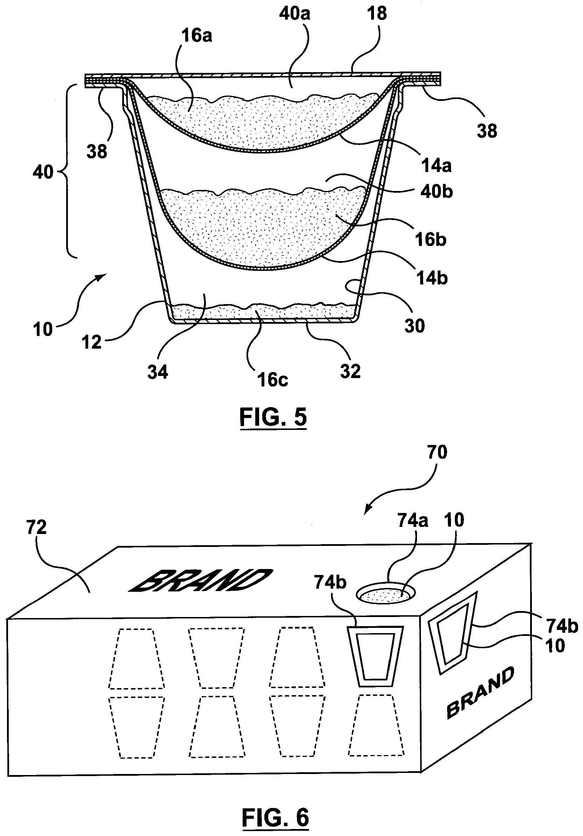

In an alternate embodiment, as shown in Figure 5, capsule 10 further includes a first filter 14a and a second filter 14b disposed in interior space 34. First filter 14a defines a first ingredients chamber 40a that is disposed proximate to cover 18. First ingredients chamber 40a is adapted to contain a subset of ingredients 16a that have visual attributes that may be viewed through window 50a. First filter 14a may have larger openings than second filter 14b given the larger size of ingredients 16a that may be disposed in first ingredients chamber 40a. For example, first filter 14a may have openings that are greater than a #16 mesh (1.18 mm) in size. Additional ingredients 16b are disposed in a second ingredients chamber 40b disposed below first ingredients chamber 40a (these may include additional insoluble ingredients 16 that may have less desirable visual attributes). Additional ingredients 16c may also be disposed in interior space 34 outside of the first and second ingredients chambers 40a and 40b (these may include soluble or active ingredients 16).

One or more vents 60 may be provided in capsule 10 to allow the aroma from one or more ingredients 16 to be transferred to the outside of capsule 10 prior to use in machine. Vents 60 may include vents 60a defined in cover 18 or vents 60b defined in body 12, such as in flange 38 internally of where cover 18 and filter 14 are bonded to flange 38. Preferably, vents 60 are adapted to restrict air flow between the interior and exterior of capsule 10 unless the pressure within capsule 10 exceeds a predetermined amount.

Body 12 of capsule 10 may be deformable for example in order that in may be squeezed to transfer aromatic air from within capsule to outside capsule 10. Preferably, for capsules containing ingredients 16 that are not negatively impacted by exposure to oxygen, body 12 is formed of a material that is resiliently deformable in order that capsule 10 returns to its original form after it has been squeezed. Vents 60 also allows excess gas that may build up within capsule 10 (such as off gassing of carbon monoxide from roasted coffee) to be vented out of capsule 10.

Cover 18 and/or body 12 of capsule 10 may alternatively be comprised of one or more materials that exhibit high aroma permeability. Such materials may for example include materials with low barrier properties such as PE and PP. Alternatively, such materials may comprise a finely perforate film with cone-like perforations, where the cone points are pointed inwards to interior space 34 of capsule 10. The diameter of the cone points is small enough so as to not allow liquid to pass through the material during normal operational conditions for storage and use of capsule 10. These cones act as "aroma release channels" when the capsule is dry.

Referring to Figure 6, capsules 10 may be contained within a carton 70 that allows a consumer to engage with the sensory attributes of the capsule 10 and the ingredients 16 contained within the capsule 10. Carton 70 may include a body 72 for containing a plurality of capsules 10. Body 72 defines one or more windows 74 that allow portions of one or more capsules 10 contained within carton 70 to be visible. Windows 74 may include cover windows 74a to allow the cover 18 of one or more capsules to be seen. Windows 74 may also or instead include one or more side windows 74b to allow the side of body 12 for one or more capsules 10 to be seen. Windows 74 may further be adapted to allow other sensory attributes of capsule to be experienced. For example, side window 74b may be adapted to allow capsule 10 to be squeezed to transfer air and aroma from within capsule 10 to outside capsule 10. Cover window 74b may be open or include openings to allow air and aromas to be transferred from within carton 70 to outside carton 70 where they may be experienced by a consumer.

Capsules 10 are typically disposed in a nested arrangement within carton 10 to optimize utilization of space within carton 70. Windows 72 are preferably defined at a location on carton 70 that corresponds to the nested arrangement such that the cover 18 of capsule 10 is visible and the corresponding side of the same capsule is also exposed.

While the above description provides examples of one or more processes or apparatuses, it will be appreciated that other processes or apparatuses may be within the scope of the accompanying claims.

## Claims

1. A capsule (10), for use in a machine (20) for preparing consumable products from capsules, said capsule comprising:
a body (12) defining an interior space (34) with an opening (36) at one end;
a filter (14) disposed in said interior space to define an ingredients chamber (40) between said filter and said opening;
ingredients (16) disposed in said interior space for preparing a desired product, at least some of said ingredients being disposed in said ingredients chamber; and
a cover (18) disposed over said opening; and
**characterized by** a window defined in said cover for viewing said ingredients disposed in said ingredients chamber wherein said cover comprises a multilayered material having a transparent outer layer (O) and a transparent sealing layer (S).

2. The capsule of claim 1, wherein said cover comprises a multilayered material having a transparent outer layer, a transparent barrier layer (B) and a transparent sealing layer.

3. The capsule of claim 1 or claim 2, wherein said multilayered material further comprises a non-transparent graphics layer (G).

4. The capsule of any one of claims 1 to 3 wherein said transparent outer layer comprises PET and said transparent sealing layer comprises PE.

5. The capsule of claim 2 wherein said transparent outer layer comprises PET, said transparent barrier layer comprises one of EVOH or metalized PET and said transparent sealing layer comprises PE.

6. The capsule of any one of claims 1-5 wherein said cover is resistant to tearing upon puncturing or the application of a peel force.

7. The capsule of any one of claims 1-6, wherein said cover has a minimum tensile strength of 20 MPa (3000 psi).

8. The capsule of any one of claims 1-7, wherein said cover is formed of a material that is adapted to shrink upon exposure to heat.

9. The capsule of any one of claims 1-8, wherein said cover has a minimum elongation of 50%.

10. The capsule of any one of claims 1-9, wherein said filter comprises a first filter (14a) that is disposed in said interior space to define a first ingredients chamber proximate to said cover and a second filter (14b) that is disposed in said interior space to define a second ingredients chamber.

11. The capsule of any one of claims 1-10, further comprising an integral tab (42) defined in a flange (38) of said body that is adapted for removing said filter and said cover from said body with the application of a peeling force following use of said capsule.

12. The capsule of any one of claims 1-11 wherein said ingredients include one or more of whole leaf teas, herbs, spices, fruits and flowers.

13. The capsule of any one of claims 1-12, wherein at least 50% of the ingredients comprise ingredients having a particulate size greater than a #16 mesh (1.18 mm).

14. The capsule of any one of claims 1-13, further comprising a window (50b) defined in said body for viewing said interior space.

## Patentansprüche

1. Kapsel (10) zur Verwendung in einer Maschine (20) zur Zubereitung von genießbaren Produkten aus Kapseln, wobei die Kapsel enthält:
ein Gehäuse (12), das einen Innenraum (34) mit einer Öffnung (36) an einem Ende bildet;
ein Filter (14), das in dem Innenraum angeordnet ist, um zwischen dem Filter und der Öffnung eine Inhaltsstoffkammer (40) zu bilden;
Inhaltsstoffe (16), die in dem Innenraum zur Zubereitung eines gewünschten Produkts angeordnet sind, wobei einige der Inhaltsstoffe in der Inhaltsstoffkammer angeordnet sind; und
eine Abdeckung (18), die über der Öffnung angeordnet ist; und
**gekennzeichnet durch** ein Fenster, das in der Abdeckung zur Betrachtung der in der Inhaltsstoffkammer angeordneten Inhaltsstoffe gebildet ist, wobei die Abdeckung ein mehrlagiges Material mit einer durchsichtigen Außenschicht (O) und einer durchsichtigen Dichtungsschicht (S) aufweist.

2. Kapsel nach Anspruch 1, wobei die Abdeckung ein mehrlagiges Material mit einer durchsichtigen Außenschicht, einer durchsichtigen Sperrschicht (B) und einer durchsichtigen Dichtungsschicht aufweist.

3. Kapsel nach Anspruch 1 oder 2, wobei das mehrlagige Material des Weiteren eine nicht durchsichtige Graphikschicht (G) umfasst.

4. Kapsel nach einem der Ansprüche 1 bis 3, wobei die durchsichtige Außenschicht aus PET besteht und die durchsichtige Dichtungsschicht aus PE besteht.

5. Kapsel nach Anspruch 2, wobei die durchsichtige Außenschicht aus PET besteht, die durchsichtige Sperrschicht aus einem von EVOH oder metallisiertem PET besteht und die durchsichtige Dichtungsschicht aus PE besteht.

6. Kapsel nach einem der Ansprüche 1 bis 5, wobei die Abdeckung zerreißfest ist beim Durchstechen oder bei der Anwendung einer Schälkraft.

7. Kapsel nach einem der Ansprüche 1 bis 6, wobei die Abdeckung eine Mindestzerreißfestigkeit von 20 MPa (3000 psi) aufweist.

8. Kapsel nach einem der Ansprüche 1 bis 7, wobei die Abdeckung aus einem Material gebildet ist, das bei Wärmebeanspruchung schrumpfen soll.

9. Kapsel nach einem der Ansprüche 1 bis 8, wobei die Abdeckung eine Mindestdehnung von 50% besitzt.

10. Kapsel nach einem der Ansprüche 1 bis 9, wobei das Filter ein erstes Filter (14a), das in dem Innenraum angeordnet ist, um eine erste Inhaltsstoffkammer unmittelbar an der Abdeckung zu bilden, und ein zweites Filter (14b), das in dem Innenraum angeordnet ist, um eine zweite Inhaltsstoffkammer zu bilden, aufweist.

11. Kapsel nach einem der Ansprüche 1 bis 10, des Weiteren umfassend einen in einem Bördelrand (38) des Gehäuses gebildeten Aufreißstreifen (42) aus einem Stück, der gestaltet ist, das Filter und die Abdeckung vom Gehäuse bei Anwendung einer Schälkraft zu entfernen, dem sich ein Gebrauch der Kapsel anschließt.

12. Kapsel nach einem der Ansprüche 1 bis 11, wobei die Inhaltsstoffe eins oder mehrere von ganzen Teeblättern, Kräutern, Gewürzen, Früchten und Blumen umfassen.

13. Kapsel nach einem der Ansprüche 1 bis 12, wobei mindestens 50% der Inhaltsstoffe aus Inhaltsstoffen mit einer Stoffteilchengröße größer als Maschenzahl 16 (1,18 mm) bestehen.

14. Kapsel nach einem der Ansprüche 1 bis 13, des Weiteren umfassend ein Fenster (50b), das in dem Gehäuse zur Betrachtung des Innenraums gebildet ist.

## Revendications

1. Capsule (10) destinée à être utilisée dans une machine (20) pour la préparation de produits consommables à partir de capsules, ladite capsule comprenant :
un corps (12) définissant un espace intérieur (34) avec une ouverture (36) à une extrémité ;
un filtre (14) disposé dans ledit espace intérieur pour définir une chambre à ingrédients (40) entre ledit filtre et ladite ouverture ;
des ingrédients (16) disposés dans ledit espace intérieur pour la préparation d'un produit souhaité, au moins certains desdits ingrédients étant disposés dans ladite chambre à ingrédients ; et
un couvercle (18) disposé sur ladite ouverture ; et
**caractérisée par** une fenêtre définie dans ledit couvercle pour visualiser lesdits ingrédients disposés dans ladite chambre à ingrédients, ledit couvercle comprenant un matériau multi-couche ayant une couche externe transparente (O) et une couche d'étanchéité transparente (S).

2. Capsule selon la revendication 1, dans laquelle ledit couvercle comprend un matériau multi-couche ayant une couche externe transparente, une couche protectrice transparente (B) et une couche d'étanchéité transparente.

3. Capsule selon la revendication 1 ou la revendication 2, dans laquelle ledit matériau multi-couche comprend en outre une couche graphique non transparente (G).

4. Capsule selon l'une des revendications 1 à 3, dans laquelle ladite couche externe transparente comprend du PET et ladite couche d'étanchéité transparente comprend du PE.

5. Capsule selon la revendication 2, dans laquelle ladite couche externe transparente comprend du PET, ladite couche protectrice transparente comprend un parmi de l'EVOH ou un PET métallisé et ladite couche d'étanchéité transparente comprend du PE.

6. Capsule selon l'une des revendications 1 à 5, dans laquelle ledit couvercle est résistant à une déchirure lors d'une perforation ou l'application d'une force de pelage.

7. Capsule selon l'une des revendications 1 à 6, dans laquelle ledit couvercle présente une résistance à la traction minimum de 20 MPa (3000 psi).

8. Capsule selon l'une des revendications 1 à 7, dans laquelle ledit couvercle est constitué d'un matériau qui est conçu pour de rétracter lorsqu'il est exposé à la chaleur.

9. Capsule selon l'une des revendications 1 à 8, dans laquelle ledit couvercle présente un allongement minimum de 50 %

10. Capsule selon l'une des revendications 1 à 9, dans laquelle ledit filtre comprend un premier filtre (14a) qui est disposé dans ledit espace intérieur pour définir une première chambre à ingrédients à proximité dudit couvercle et un deuxième filtre (14b) qui est disposé dans ledit espace intérieur pour définir une deuxième chambre à ingrédients.

11. Capsule selon l'une des revendications 1 à 10, comprenant en outre une languette intégrée (42) définie dans une bride (38) dudit corps, qui est conçue pour retirer ledit filtre et ledit couvercle dudit corps avec l'application d'une force de pelage suite à l'utilisation de ladite capsule.

12. Capsule selon l'une des revendications 1 à 11, dans laquelle les ingrédients comprennent un ou plusieurs parmi des feuilles de thé entières, des herbes, des épices, des fruits et des fleurs.

13. Capsule selon l'une des revendications 1 à 12, dans laquelle au moins 50 % des ingrédients comprennent des ingrédients ayant une taille de particules supérieure à une maille #16 (1,18 mm).

14. Capsule selon l'une des revendications 1 à 13, comprenant en outre une fenêtre (50b) définie dans ledit corps pour visualiser ledit espace intérieur.
